(19) **Europäisches Patentamt / European Patent Office / Office européen des brevets**

(11) **EP 2 548 312 B1**

(12) **FASCICULE DE BREVET EUROPEEN**

(45) Date de publication et mention de la délivrance du brevet:
**01.02.2017 Bulletin 2017/05**

(51) Int Cl.:
*H04B 7/04* [(2017.01)]  *H04B 7/08* [(2006.01)]

(21) Numéro de dépôt: **11712997.3**

(22) Date de dépôt: **14.03.2011**

(86) Numéro de dépôt international:
**PCT/FR2011/050503**

(87) Numéro de publication internationale:
**WO 2011/114047 (22.09.2011 Gazette 2011/38)**

(54) **PROCEDE D'EMISSION D'UN SIGNAL POUR UN SYSTEME MIMO MULTI UTILISATEURS, EMETTEUR, PRODUIT PROGRAMME D'ORDINATEUR ET SUPPORT D'INFORMATION CORRESPONDANTS**

VERFAHREN ZUR ÜBERTRAGUNG EINES SIGNALS FÜR EIN MIMO-SYSTEM MIT MEHREREN NUTZERN, SENDER UND ENTSPRECHENDES COMPUTERPROGRAMMPRODUKT SOWIE DATENMEDIUM

METHOD FOR TRANSMITTING A SIGNAL FOR A MULTIUSER MIMO SYSTEM, TRANSMITTER, AND CORRESPONDING COMPUTER PROGRAM PRODUCT AND DATA MEDIUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.03.2010 FR 1051830**

(43) Date de publication de la demande:
**23.01.2013 Bulletin 2013/04**

(73) Titulaire: **Orange**
**75015 Paris (FR)**

(72) Inventeurs:
- **AMARA, Mustapha**
  **Sousse 4000 (TN)**
- **YUAN-WU, Julie**
  **F-78000 Versailles (FR)**
- **SLOCK, Dirk**
  **F-06220 Vallauris (FR)**

(74) Mandataire: **Jeune, Pascale**
**Orange**
**IMTW/OLPS/IPL/PAT**
**Orange Gardens**
**44 Avenue de la République**
**CS 50010**
**92326 Châtillon Cedex (FR)**

- **MUSTAPHA AMARA ET AL: "Receiver and transmitter iterative optimization using maximum sum-rate criterion for Multi-User MIMO systems", COMMUNICATIONS, CONTROL AND SIGNAL PROCESSING (ISCCSP), 2010 4TH INTERNATIONAL SYMPOSIUM ON, IEEE, PISCATAWAY, NJ, USA, 3 mars 2010 (2010-03-03), pages 1-6, XP031675687, ISBN: 978-1-4244-6285-8**
- **HONGMEI WANG ET AL: "PHY 13-4 - Robust Transmission for Multiuser MIMO Downlink Systems with Imperfect CSIT", WIRELESS COMMUNICATIONS AND NETWORKING CONFERENCE, 2008. WCNC 2008. IEEE, IEEE, PISCATAWAY, NJ, USA, 31 mars 2008 (2008-03-31), pages 340-344, XP031243650, ISBN: 978-1-4244-1997-5 cité dans la demande**
- **JINFAN ZHANG ET AL: "Joint linear transmitter and receiver design for the downlink of multiuser MIMO systems", IEEE COMMUNICATIONS LETTERS, IEEE SERVICE CENTER, PISCATAWAY, NJ, US, vol. 9, no. 11, 1 novembre 2005 (2005-11-01), pages 991-993, XP001512789, ISSN: 1089-7798, DOI: DOI:10.1109/LCOMM.2005.11009 cité dans la demande**

(56) Documents cités:
**US-A1- 2008 159 425**

- **MUSTAPHA AMARA ET AL: "Optimized linear receivers and power allocation for two Multi-User MIMO downlink schemes with linear precoding", COMMUNICATIONS, CONTROL AND SIGNAL PROCESSING (ISCCSP), 2010 4TH INTERNATIONAL SYMPOSIUM ON, IEEE, PISCATAWAY, NJ, USA, 3 mars 2010 (2010-03-03), pages 1-5, XP031675686, ISBN: 978-1-4244-6285-8**

- **KYUNGHO PARK ET AL: "Adaptive stack-based iterative precoding for the multiuser MIMO downlink", PERSONAL, INDOOR AND MOBILE RADIO COMMUNICATIONS, 2008. PIMRC 2008. IEEE 19TH INTERNATIONAL SYMPOSIUM ON, IEEE, PISCATAWAY, NJ, USA, 15 septembre 2008 (2008-09-15), pages 1-5, XP031371323, ISBN: 978-1-4244-2643-0**

**Description**

**Domaine de l'invention**

La présente invention se rapporte au domaine des télécommunications. Au sein de ce domaine, l'invention se rapporte plus particulièrement aux communications dites numériques. Les communications numériques comprennent en particulier les communications sans fil ; elles comprennent aussi par exemple les communications filaires. Le support de transmission des communications est couramment appelé canal de transmission ou de propagation, à l'origine en référence à un canal aérien et par extension en référence à tout canal.

L'invention concerne les techniques d'émission et de réception dans un système multi antennes multi flux avec au moins un flux par utilisateur. Elle s'applique essentiellement aux communications sur voie descendante et plus particulièrement d'une station de base vers plusieurs terminaux. Dans ce cas, le canal de transmission est dit canal de diffusion.

**Art antérieur**

Les systèmes de communication numérique multi antennes couramment désignés par l'acronyme MIMO (acronyme des termes anglosaxons Multiple Input Multiple Output pour "Entrées Multiples Sorties Multiples") englobent tous les systèmes qui comportent plusieurs antennes à l'émission et généralement plusieurs antennes à la réception. Un système MIMO avec une seule antenne de réception est aussi désigné par l'acronyme MISO (acronyme des termes anglosaxons Multiple Input Single Output).

Ces systèmes répondent à la demande toujours croissante de fourniture de services de télécommunication variés à des débits toujours supérieurs aux offres existantes. En effet, on a prouvé que la capacité des canaux MIMO augmente proportionnellement avec le nombre minimal des antennes en émission et en réception.

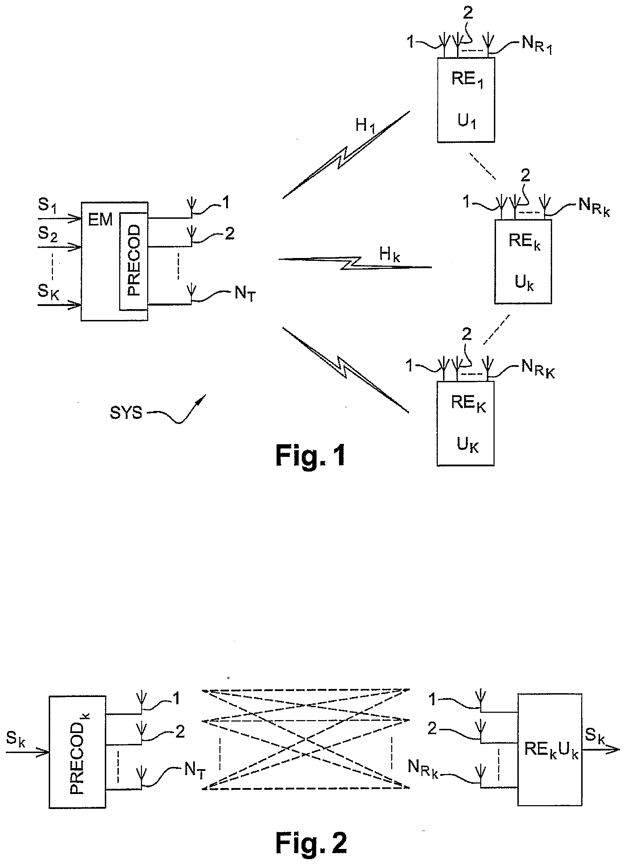

Un exemple d'un tel système est illustré par le schéma de la figure 1. Le système comprend une station de base avec $N_T$ antennes de transmission et $K$ mobiles avec $N_{R_k}$ antennes de réception pour l'utilisateur $k$ associé au mobile $k$. Le canal de transmission est pour l'utilisateur $k$ modélisé par une matrice $H_k$ de taille $N_{R_k} \times N_T$ qui représente l'impacte du canal de transmission entre les antennes à l'émission et les antennes à la réception. Chaque composante de la matrice est une variable aléatoire de moyenne nulle et de variance considérée égale à 1.

L'invention se place dans un contexte de canal à évanouissements lents de Rayleigh par utilisateur avec indépendance totale entre les différents canaux des différents utilisateurs. Ceci permet de considérer que pour chaque flux de données associé à un utilisateur, le canal de propagation du flux est indépendant des canaux de propagation des autres flux. Le contexte de canal à évanouissements lents de Rayleigh par utilisateur avec indépendance totale entre les différents canaux des différents utilisateurs correspond typiquement à une propagation en milieu urbain, c'est-à-dire à trajets multiples.

Dans le cas d'un système MIMO multi utilisateurs, les flux des différents utilisateurs sont transmis simultanément de la station de base aux récepteurs des utilisateurs.

L'invention se place dans un contexte de diffusion, au sens de la théorie de l'information, c'est-à-dire dans un contexte de transmission de différents flux pour différents utilisateurs à partir d'un émetteur. En outre, cet émetteur a une connaissance parfaite du canal de transmission. Ceci implique une estimation parfaite de toutes les composantes des matrices $H_k$ de tous les utilisateurs puisqu'on est dans un canal de diffusion ainsi que l'invariance du canal de transmission entre le moment où est effectuée l'estimation du canal à la réception et le moment où cette estimation est exploitée à l'émission.

Côté émission, des pré-codeurs permettent de séparer les flux des différents utilisateurs afin de minimiser les interférences inter utilisateurs à la réception et d'améliorer par conséquence le débit véhiculé. Un flux de données est associé à un utilisateur. Les flux des différents utilisateurs sont par exemple relatifs à un même service de télécommunication et/ou à différents services (par exemple voix, data, vidéo).

Bien que le nombre maximal de flux par utilisateur soit de $Q_k = \min(N_{R_k}, T_k)$, la description est limitée à un flux par utilisateur par souci de simplification.

Le débit total maximal pouvant être véhiculé par un système MIMO vers tous les utilisateurs est une quantité très importante permettant son dimensionnement. Cette quantité a été définie par la théorie de l'information comme la capacité ergodique du système.

L'optimisation du débit total se base sur l'optimisation conjointe de l'émetteur et du récepteur afin de trouver la combinaison qui minimise le MSE (abréviations des termes anglosaxons Mean Square Error).

Les techniques connues pour des systèmes MIMO multi utilisateurs sont basées sur des critères tels que le MMSE (acronyme des termes anglosaxons Minimum Mean Square Error) et le SJNR (acronyme des termes anglosaxons Signal to Jamming and Noise Ratio) qui permettent d'effectuer une optimisation du système.

Certaines analyses théoriques ont démontré que la capacité du canal de diffusion MU-MIMO (abréviation de Multi Utilisateurs MIMO) peut être atteinte à l'aide de l'algorithme DPC (acronyme des termes anglosaxons Dirty Paper Coding) [3,4]. Cependant, un précodage DPC reste, malgré les grandes avancées des calculateurs, un algorithme très difficile à mettre en place à cause de la puissance de calcul requise.

Ainsi, des solutions sous optimales de précodeurs linéaires avec une faible complexité ont vu le jour.

Une catégorie de précodeurs linéaires met en oeuvre des algorithmes dits linéaires non itératifs appelés aussi directs (ou CF selon les abréviations des termes anglosaxons Closed Form). Ces algorithmes déterminent pour chaque flux un couple de vecteurs d'émission et de réception. Les couples de vecteurs relatifs à tous les utilisateurs sont calculés par la station de base. La station de base informe les utilisateurs de leurs vecteurs de réception en utilisant typiquement un canal de signalisation. La station de base émet l'information de chaque flux en utilisant le vecteur d'émission correspondant. Tous les flux sont transmis en même temps. A la réception, chaque récepteur associé à un utilisateur utilise le vecteur de réception communiqué par la station de base pour combiner les signaux reçus sur les différentes antennes et extraire les échantillons correspondant au flux de l'utilisateur.

Parmi ces précodeurs, un précodeur SJNR est un précodeur qui se base sur la maximisation du rapport signal sur signal de brouillage et bruit, SJNR, rapport donné par l'expression suivante :

$$SJNR_k = \frac{\mathbf{T}_k^H \mathbf{H}_k^H \mathbf{H}_k \mathbf{T}_k}{\mathbf{T}_k^H \sum_{h=1, j \neq k}^{K} \mathbf{H}_j^H \mathbf{H}_j \mathbf{T}_k + N_0 \mathbf{I}} \qquad (1.1)$$

A titre d'exemple, on connaît de l'article [1] un procédé basé sur un pré-codeur défini comme la valeur propre généralisée de l'expression du SJNR.

Selon cet article, le pré-codeur SJNR pour l'utilisateur $k$ est déterminé par l'équation suivante :

$$\mathbf{T}_k = \sqrt{P_k} \, \zeta_m \left( \left( \sum_{j=1, j \neq k}^{K} \mathbf{H}_j^H \mathbf{H}_j + \frac{N_0}{P_k} \mathbf{I} \right)^{-1} \mathbf{H}_k^H \mathbf{H}_k \right)$$

$$\text{avec} \sum_{k=1}^{K} P_k = P_T \qquad (1.2)$$

où $P_k$ est la puissance transmise à l'utilisateur $k$ et $\xi_m[x]$ est la fonction qui renvoie la plus grande valeur propre de x, c'est-à-dire $\xi_m[x]$ est le vecteur propre correspondant à la plus grande valeur propre dex. Pour le récepteur, les auteurs de [1] proposent un simple récepteur MF (acronyme des termes anglosaxons Matched Filter) dont l'expression est la suivante :

$$\mathbf{D}_{MF,k} = \frac{\left( \mathbf{H}_k \mathbf{T}_k \right)^H}{\left\| \left( \mathbf{H}_k \mathbf{T}_k \right) \right\|} \qquad (1.7)$$

Une version itérative de ce précodeur est décrite par [6] et l'expression correspondante du précodeur s'exprime sous la forme :

$$\mathbf{T}_k^{iter} = \sqrt{P_k} \, \zeta_m \left( \left( \sum_{j=1, j \neq k}^{K} \left( \mathbf{H}_j^{iter} \right)^H \left( \mathbf{H}_j^{iter} \right) + \frac{N_0^{iter}}{P_k} \mathbf{I} \right)^{-1} \left( \mathbf{H}_k^{iter} \right)^H \mathbf{H}_k^{iter} \right) \qquad (1.3)$$

Dans cette expression (1.3), $N_0^{iter}$ représente le niveau de bruit perçu à la réception par l'utilisateur $k$ à l'itération $iter$. $N_0^{iter}$ est donnée par l'expression :

$$N_0^{iter} = N_0 \mathbf{D}_k^{iter} \left( \mathbf{D}_k^{iter} \right)^H$$

avec $\mathbf{D}_k^{iter}$ le récepteur considéré pour l'utilisateur $k$. Dans [6] le récepteur proposé est un récepteur MSR dont l'expression est la suivante :

$$\mathbf{D}_{MSR,k} = \left( \varsigma_m \left( \left( \sum_{j=1, j\neq k}^{K} \mathbf{H}_k \mathbf{T}_j \mathbf{R}_{s_j} \mathbf{T}_j^H \mathbf{H}_k^H + N_0 \mathbf{I} \right)^{-1} \mathbf{H}_k \mathbf{T}_k \mathbf{R}_{s_k} \mathbf{T}_k^H \mathbf{H}_k^H \right) \right)^H \qquad (1.8)$$

L'analyse des performances du système comprenant l'émetteur et le récepteur se base sur la valeur du débit total du système. L'expression du débit total *SR* (abréviations des termes anglosaxons Sum-Rate) a été donnée par la théorie de l'information comme la somme des débits offerts aux différents utilisateurs :

$$SR = \sum_{k=1}^{K} \log_2 \left( 1 + \frac{\mathbf{D}_k \mathbf{H}_k \mathbf{T}_k \mathbf{R}_{s_k} \mathbf{T}_k^H \mathbf{H}_k^H \mathbf{D}_k^H}{\mathbf{D}_k (\gamma_k + N_0 \mathbf{I}) \mathbf{D}_k^H} \right) \qquad (1.10)$$

où le terme $\gamma_k = \mathbf{H}_k \sum_{j=1, j\neq k}^{K} \mathbf{T}_j \mathbf{R}_{s_j} \mathbf{T}_j^H \mathbf{H}_k^H$ représente l'interférence générée par les autres utilisateurs et captés par l'utilisateur k.

Le système décrit dans [6] permet effectivement une maximisation du débit mais la convergence de l'algorithme se fait vers un maximum local qui dépend de l'initialisation de l'algorithme. L'optimisation du système n'est par conséquent pas optimale quand le maximum local n'est pas un maximum maximorum.

Le système décrit dans le document "Receiver and transmitter iterative optimization using maximum sum-rate criterion for Multi-User MIMO systems" (MUSTAPHA AMARA ET AL, COMMUNICATIONS, CONTROL AND SIGNAL PROCESSING (ISCCSP), 2010 4TH INTERNATIONAL SYMPOSIUM ON, IEEE, PISCATAWAY, NJ, USA, 3 mars 2010, pages 1-6) divulgue un procédé d'émission destiné à un système MIMO multiutilisateurs et comprenant le calcul conjoint, par flux de données, d'un précodeur linéaire et d'un récepteur adaptés.

**Exposé de l'invention**

L'invention propose une technique d'émission et une technique de réception pour un système MIMO multi utilisateurs permettant d'améliorer l'optimisation du système connu pour une meilleure maximisation de la capacité de transmission du système. Le système MIMO multi utilisateurs comprend $N_T$ antennes d'émission et $N_R = \sum_{k=1}^{K} N_{R_k}$ antennes de réception associées à *K* récepteurs associés respectivement à K utilisateurs. Le système MIMO comprend un émetteur qui met en oeuvre un procédé d'émission simultanée *de K* flux de données alloués respectivement à *K* utilisateurs différents selon l'invention.

Le procédé d'émission selon l'invention est particulièrement remarquable en ce qu'il comprend au moins par flux de données :

- la succession de deux algorithmes itératifs différents de calcul conjoint d'un précodeur linéaire et d'un récepteur adaptés pour système MIMO multiutilisateurs, le deuxième algorithme itératif étant initialisé par la valeur de sortie du premier algorithme itératif.

Les algorithmes itératifs ne présentent pas tous les mêmes particularités. Les inventeurs ont observés que, contre toute attente, la cascade de deux algorithmes itératifs de type différent permet d'améliorer le débit total atteint comparativement à celui atteint avec un seul algorithme itératif sans pour autant augmenter globalement le nombre d'itérations. Cette cascade a la particularité de diminuer l'impact des maximas locaux sur le processus de convergence et d'augmenter par voie de conséquence la convergence du deuxième algorithme itératif vers un maximum absolu. En effet, la valeur d'initialisation du deuxième algorithme est obtenue à l'issue d'une ou plusieurs itérations du premier algorithme itératif et non plus de manière arbitraire. Ainsi, la détermination de la valeur d'initialisation prend en compte les conditions opérationnelles du système MIMO (canal de transmission, bruit (SNR), nombre d'antennes) contrairement à un choix arbitraire.

Le basculement du premier algorithme au deuxième algorithme est effectué de façon dynamique selon un test de sortie basé sur un seuil de variation du débit atteint sur une fenêtre donnée d'itérations. De manière alternative, il peut être fixé un nombre maximal d'itérations. Ce test assure que la valeur des vecteurs initiaux utilisés par le deuxième algorithme prend suffisamment en compte les variations des conditions opérationnelles ; le nombre d'itérations du premier algorithme est donc variable en fonction de ces conditions opérationnelles.

Typiquement, le premier algorithme itératif est choisi comme présentant une variation non stable du débit total et le deuxième algorithme est choisi comme présentant une variation strictement croissante du débit total.

Plus particulièrement, le premier algorithme et le deuxième algorithme prennent en compte un premier type de précodage linéaire dit SJNR qui maximise un rapport signal sur signal de brouillage et bruit ou un deuxième type de précodage linéaire dit MMSE qui minimise une erreur quadratique moyenne.

Plus particulièrement, le premier algorithme prend en compte un premier type de récepteur dit MF et le deuxième algorithme prend en compte un deuxième type de récepteur dit MSR.

Selon une implémentation préférée, le premier algorithme et le deuxième algorithme prennent en compte un premier type de précodage linéaire dit SJNR et le premier algorithme prend en compte un premier type de récepteur dit MF et le deuxième algorithme prend en compte un deuxième type de récepteur dit MSR.

L'invention peut aussi être exprimée sous la forme plus détaillée d'un procédé d'émission simultanée *de K* flux de données alloués respectivement à *K* utilisateurs différents, mis en oeuvre par un émetteur destiné à un système MIMO multi utilisateurs à $N_T$ antennes d'émission et $N_R = \sum_{k=1}^{K} N_{R_k}$ antennes de réception associées à *K* récepteurs associés respectivement à *K* utilisateurs, comprenant au moins par flux de données :

- un calcul itératif conjoint d'un premier vecteur d'émission d'un précodage linéaire et d'un premier vecteur de réception $D_k^1$ associé à un premier type de récepteur, avec un test de sortie du calcul itératif basé sur un seuil de variation du débit atteint sur une fenêtre donnée d'itérations ou basé sur un nombre maximal d'itérations,

- un calcul itératif conjoint d'un deuxième vecteur d'émission $T_k^2$ du précodage linéaire et d'un deuxième vecteur de réception $D_k^2$ associé à un deuxième type de récepteur différent du premier, initialisé avec le premier vecteur de réception, avec un test de sortie du calcul itératif basé sur un seuil de variation du débit entre itérations successives ou basé sur un nombre maximal d'itérations, et en ce qu'il comprend :

- l'émission des *K* deuxième vecteurs de réception $D_k^2$ à destination des *K* récepteurs recevant les K flux,

- l'émission des K flux précodés par les respectivement K deuxième vecteurs d'émission.

Selon une implémentation préférée, les étapes du procédé d'émission sont déterminées par les instructions d'un programme d'émission incorporé dans un circuit électronique telle une puce ellemême pouvant être disposée dans un dispositif électronique tel un émetteur. Le procédé d'émission selon l'invention peut tout aussi bien être mis en oeuvre lorsque ce programme est chargé dans un organe de calcul tel un processeur ou équivalent dont le fonctionnement est alors commandé par l'exécution du programme.

L'invention a en outre pour objet un émetteur adapté pour un système multi utilisateurs MIMO de télécommunication comprenant $N_T$ antennes d'émission destinées à être connectées à l'émetteur, $N_R = \sum_{k=1}^{K} N_{R_k}$ antennes de réception et *K* récepteurs associés respectivement à *K* utilisateurs et connectés respectivement à $N_{R_k}$ parmi les $N_R = \sum_{k=1}^{K} N_{R_k}$ antennes de réception, pour émettre simultanément *K* flux de données alloués respectivement aux *K* utilisateurs. L'émetteur comprend :

- *K* pré-codeurs linéaires de vecteur d'émission $T_k$ pour générer *K* vecteurs intermédiaires de taille $N_T$,

- par pré-codeur, un moyen de calcul adapté pour calculer itérativement de manière conjointe un premier vecteur d'émission d'un précodage linéaire et un premier vecteur de réception $D_k^1$ de taille $N_{R_k}$ associé à un premier type de récepteur, avec un test de sortie du calcul itératif basé sur un seuil de variations du débit atteint sur une fenêtre donnée d'itérations ou basé sur un nombre maximal d'itérations, puis pour calculer itérativement de manière conjointe un deuxième vecteur d'émission $T_k^{'2}$ du précodage linéaire et un deuxième vecteur de réception $D_k^{2}$ de taillen $N_{R_k}$ associé à un deuxième type de récepteur différent du premier, initialisé avec le premier vecteur de réception, avec un test de sortie du calcul itératif basé sur un seuil de variations du débit entre itérations successives ou basé sur un nombre maximal d'itérations, les $K$ vecteurs d'émission des $K$ pré-codeurs linéaires étant égal au deuxième vecteur d'émission $T_k^{'2}$,

- $N_T$ additionneurs des $N_T$ composantes *des K* vecteurs intermédiaires pour générer un vecteur d'alimentation des $N_T$ antennes,

- un moyen d'émission *des K* deuxième vecteurs de réception $D_k^2$ à destination *des K* récepteurs.

L'invention a en outre pour objet un système multi utilisateurs MIMO de télécommunication comprenant un émetteur, $N_T$ antennes d'émission connectées à l'émetteur, $N_R = \sum_{k=1}^{K} N_{R_k}$ antennes de réception et *K* récepteurs associés respectivement à *K* utilisateurs et connectés respectivement à $N_{R_k}$ parmi les $N_R = \sum_{k=1}^{K} N_{R_k}$ antennes de réception.L'émetteur comprend :

- K pré-codeurs linéaires de vecteur d'émission $T_k$ pour générer *K* vecteurs intermédiaires de taille $N_T$,

- par pré-codeur, un moyen de calcul adapté pour calculer itérativement de manière conjointe un premier vecteur d'émission d'un précodage linéaire et un premier vecteur de réception $D_k^1$ de taille $N_{R_k}$ associé à un premier type de récepteur, avec un test de sortie du calcul itératif basé sur un seuil de variations du débit atteint sur une fenêtre donnée d'itérations ou basé sur un nombre maximal d'itérations, puis pour calculer itérativement de manière conjointe un deuxième vecteur d'émission $T_k^{'2}$ du précodage linéaire et un deuxième vecteur de réception $D_k^2$ de taille $N_{R_k}$ associé à un deuxième type de récepteur différent du premier, initialisé avec le premier vecteur de réception, avec un test de sortie du calcul itératif basé sur un seuil de variations du débit entre itérations successives ou basé sur un nombre maximal d'itérations, les $K$ vecteurs d'émission *des K* pré-codeurs linéaires étant égal au deuxième vecteur d'émission $T_k^{'2}$,

- $N_T$ additionneurs des $N_T$ composantes des $K$ vecteurs intermédiaires pour générer un vecteur d'alimentation des $N_T$ antennes,

- un moyen d'émission des K deuxième vecteurs de réception $D_k^2$ à destination *des K* récepteurs

Et chaque récepteur *k* comprend :

- un moyen de réception du vecteur de réception $D_k^2$ qui maximise le débit du flux *k*,

- un décodeur linéaire adapté pour extraire le flux *k* parmi les *K* flux au moyen du vecteur de réception $D_k^2$, un moyen pour estimer la matrice $H_k$ du canal de propagation.

Et le système comprend, associé à chaque récepteur *k*, un moyen pour émettre la matrice $H_k$ à destination de l'émetteur.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.

## Liste des figures

D'autres caractéristiques et avantages de l'invention apparaîtront lors de la description qui suit d'exemples donnés à titre d'exemples non limitatifs, description faite en regard des figures annexées suivantes.

La figure 1 est un schéma d'un système MIMO linéaire multi utilisateurs selon l'art antérieur.

La figure 2 est un schéma du système MIMO de la figure 1 limité au traitement du flux $k$.

La figure 3 est un schéma détaillé du pré-codage *des K* flux $S_1,...,S_K$ de données selon l'invention.

La figure 4 représente sous forme de courbes des résultats de simulation donnant une moyenne du débit total faite sur les réalisations du canal de transmission, en fonction d'un niveau de puissance totale émise qui impacte directement à la réception le rapport signal à bruit, pour un premier exemple d'un système MIMO multi utilisateurs mettant en oeuvre trois algorithmes différents.

Les figures 5 et 6 sont des loupes de la figure 4.

La figure 7 représente sous forme de courbes des résultats de simulation donnant une moyenne du débit total en fonction d'un niveau de puissance totale émise qui impacte directement à la réception le rapport signal à bruit, pour un deuxième exemple d'un système MIMO multi utilisateurs mettant en oeuvre trois algorithmes différents.

La figure 8 est une loupe de la figure 7.

## Description d'un mode de réalisation de l'invention

Le schéma de la figure 1 représente un système MIMO linéaire multi utilisateurs selon l'art antérieur. Le système SYS comprend un émetteur avec un pré-codeur PRECOD formé de $K$ précodeurs, côté station de base, et $K$ récepteurs côtés utilisateurs qui ont tous une structure linéaire. L'émetteur est relié à $N_T$ antennes d'émission. Le récepteur de l'utilisateur $k$ est relié à $N_{R_k}$, antennes de réception. Le canal de diffusion de l'émetteur aux récepteurs, est représenté par $K$ canaux de transmission de matrice $H_k$.

Le schéma de la figure 2 représente le système MIMO de la figure 1 limité au traitement du flux $k$ . Les données $S_k$ du flux $k$ sont combinées avec le vecteur émission $T_k$ lors du pré-codage mis en oeuvre par le pré-codeur PRECOD$_k$. Le vecteur d'émission $T_k$ est calculé selon un procédé connu de l'art antérieur, par exemple un procédé basé sur un critère MMSE ou sur un critère SJNR.

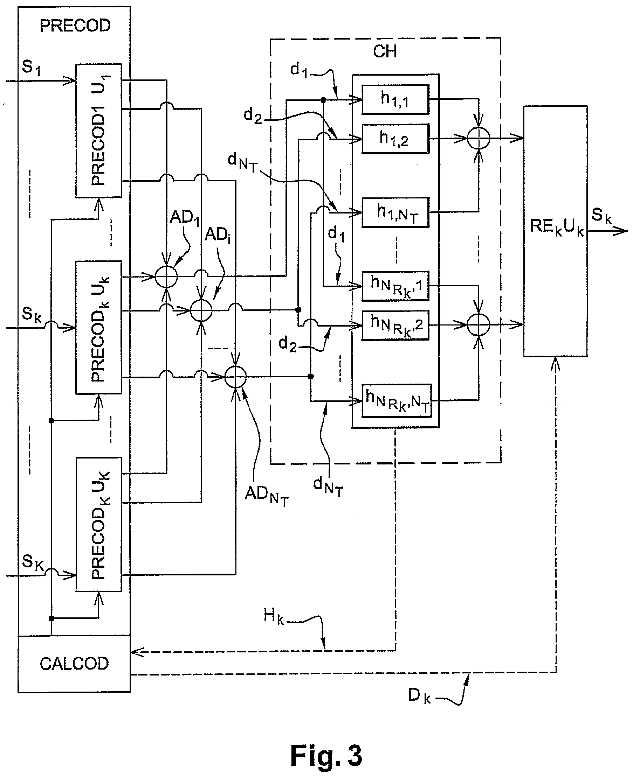

La figure 3 est un schéma détaillé du pré-codage *des K* flux $S_1,...,S_K$ de données. Le pré-codeur PRECOD est formé de $K$ pré-codeurs PRECOD$_{1,...,K}$. Les $N_T$ composantes des vecteurs de sorties des pré-codeurs, ou vecteurs intermédiaires, sont additionnées par $N_T$ additionneurs $AD_{1,...,N_T}$. Le vecteur de sortie $d_1,...,d_{N_T}$ des additionneurs correspond au signal transmis sur le canal de propagation, les $N_T$ antennes d'émission ne sont pas représentées. Le canal de propagation CH est représenté par sa matrice $H$. Le récepteur RE$_k$ de l'utilisateur $k$ exploite $N_{R_k}$ signaux reçus par $N_{R_k}$ antennes de réception non représentées. Le signal reçu par une antenne $i$ provient des $N_T$ antennes d'émission et est donc égal au signal émis $d_1,...,d_{N_T}$ pondéré par les coefficients $h_{i,1},...,h_{i,N_T}$ du canal.

Le pré-codeur comprend un module CALCOD de calcul des vecteurs d'émission et de réception pour les K flux à partir de la connaissance des coefficients $H_k$ du canal de propagation pour chaque flux $k$.

Contrairement aux techniques connues qui déterminent séparément les vecteurs initiaux d'émission et de réception, le module de calcul CALCOD selon l'invention est adapté pour déterminer conjointement ces vecteurs initiaux en mettant en oeuvre un premier algorithme itératif multi utilisateurs pour système MIMO qui prend en compte l'expression générale du débit total du système MIMO multi utilisateurs SYS pour maximiser le débit total transféré à travers le canal CH.

Après une ou plusieurs itérations, le module de calcul CALCOD bascule du premier algorithme itératif au deuxième algorithme itératif et utilise les vecteurs calculés par le premier algorithme itératif pour initialiser les valeurs des vecteurs du deuxième algorithme.

Ce point de basculement ou de "flip" entre algorithmes est crucial pour la convergence. En effet, changer d'un récepteur d'un premier type à un récepteur d'un deuxième type trop tôt peut mener à une mauvaise initialisation qui ne peut être corrigée par le récepteur de deuxième type et changer de récepteur trop tard peut ne pas permettre de récupérer les avantages que présente un récepteur de deuxième type. Une prise de décision du basculement effectuée de manière dynamique permet de prendre en compte la variation de la valeur optimale de la valeur de basculement en fonction de la réalisation du canal, du SNR du système et de la configuration utilisée (Nombre d'antennes à l'émission et à la réception).

Le tableau 1 en Annexe A est relatif à un système avec $N_T$ = 4, $N_R$ = 4, $K$ = 4 avec un flux par utilisateur pour une configuration du système auxquelles correspondent une puissance totale d'émission différente respectivement de -10 dB et 40 dB. Le tableau 1 donne la valeur optimale du point de basculement en fonction de la puissance qui varie par palier de 2,5dB. La première ligne correspond à une maximisation du débit somme total moyen sur toutes les réalisations des canaux de transmission et la seconde ligne correspond à une maximisation de la somme des débits sur chaque réalisation des K canaux de transmission pour les K utilisateurs.

Ces résultats expérimentaux montrent la forte dépendance de la valeur optimale du basculement en fonction de la valeur du SNR de fonctionnement du système mais aussi en fonction des réalisations des canaux de transmission, le SNR étant le rapport entre d'une part la puissance d'émission et d'autre part le nombre d'antennes d'émission et la puissance du bruit considérée égale à un.

Le basculement du premier algorithme au deuxième algorithme est effectué selon l'invention selon un procédé de prise de décision basé sur un critère d'arrêt. Ce procédé de prise de décision consiste à observer sur une fenêtre glissante ayant une taille de $WIN_{MF}$ préfixée l'évolution du premier algorithme en cours d'exécution. Ce premier algorithme est exécuté jusqu'à sa convergence. La convergence est déterminée par la stabilisation de la valeur du débit total SR sur la fenêtre d'observation. Une fois que ce premier algorithme itératif est stabilisé, et donc qu'il a convergé, le module de calcul CALCOD bascule sur le deuxième algorithme en prenant le point de convergence comme point d'initialisation (défini par le couple de vecteurs d'initialisation (émission, réception)) et exécute ce deuxième algorithme. En fait, l'initialisation du deuxième algorithme ne nécessite la connaissance que du vecteur de réception. La fin de l'algorithme est définie soit par un nombre maximal d'itérations $N_{\max}^{iter}$ soit par la stabilisation du débit total SR du système évaluée entre itérations successives.

Selon un mode de réalisation préféré du procédé, le premier algorithme itératif associe un précodeur SJNR et un récepteur MF et le deuxième algorithme associe un précodeur SJNR et un récepteur MSR. Le déroulement du procédé est le suivant pour chaque flux $k = 1,...,K$ : 0/ initialisation des paramètres $N_{\max}^{iter}$ (nombre d'itérations maximale global), $WIN_{MF}$ (fenêtre d'observation), $\varepsilon$, $\varepsilon_{MF}$ et $\Delta_{MSR}$ (nombre minimal d'itérations du deuxième algorithme, $\Delta_{MSR} \in \mathbb{N}^*$ et $1 \leq \Delta_{MSR} \leq N_{\max}^{iter} - WIN_{MF}$)

1/ exécution :

- calcul d'un précodeur linéaire SJNR, $\mathbf{T}_k^0$, à l'aide de la formule (1.2),

- calcul d'un récepteur MF, $\mathbf{D}_k^0 = \mathbf{D}_{MF,k}$ à l'aide de la formule (1.7),

- $iter = 1$,

2/ remplacement du canal de transmission $H_k$ par un canal virtuel équivalent donné par la cascade du canal et du récepteur noté $\mathbf{H}_k^{iter} = \mathbf{D}_k^{iter-1}\mathbf{H}_k$,

3/ calcul du nouveau précodeur SJNR, $\mathbf{T}_k^{iter}$, avec le nouveau canal ainsi obtenu en utilisant l'équation (1.3),

4/ calcul du nouveau récepteur MF, $\mathbf{D}_k^{iter} = \mathbf{D}_{MF,k}$ en fonction de $\mathbf{T}_k^{iter}$ avec l'équation (1.7),

5/ calcul de la somme des débits $SR^{iter}$ obtenue en injectant $\mathbf{T}_k^{iter}$ et $\mathbf{D}_k^{iter}$ dans l'équation (1.10),

6/ incrémentation $iter = iter + 1$ et répétition des étapes 2/ à 5/ $WIN_{MF}$ fois,

7/ Vérification de la convergence de l'algorithme MF, en vérifiant la contrainte suivante :

$$Var\left(\left[SR_{iter-WIN_{MF}},...,SR_{iter}\right]\right) = \frac{1}{WIN_{MF}}\sum_{i=0}^{WIN_{MF}}\left(SR_{iter-i} - \frac{1}{WIN_{MF}}\sum_{i=0}^{WIN_{MF}}SR_{iter-i}\right)^2 \leq \varepsilon_{MF}.$$ Si la

condition est vérifiée ou si $iter = N_{\max}^{iter} - \Delta_{MSR}$ alors passage à 8/ en conservant le vecteur $\mathbf{D}_k^{iter}$ obtenu. Sinon, incrémentation $iter = iter + 1$ et répétition des étapes 2/, 3/, 4/, 5/ et 7/,

8/ incrémentation du compteur ($iter = iter + 1$) et remplacement du canal de transmission $H_k$ par un canal virtuel équivalent donné par la cascade du canal et du récepteur noté $\mathbf{H}_k^{iter} = \mathbf{D}_k^{iter-1}\mathbf{H}_k$, (Lors de la première exécution de 8/ (c'est-à-dire en venant de 7/,) $\mathbf{D}_k^{iter-1}$ est un récepteur MF tel que calculé en 4/ dans l'itération $iter$-1.),

9/ calcul du nouveau précodeur SJNR, $\mathbf{T}_k^{iter}$, avec le nouveau canal ainsi obtenu en utilisant l'équation (1.3),

10/ calcul du nouveau récepteur optimal $\mathbf{D}_k^{iter} = \mathbf{D}_{MSR,k}$ en fonction de $\mathbf{T}_k^{iter}$ avec l'équation (1.8) d'un récepteur MSR,

11/calcul de la somme des débits, $SR^{iter}$, obtenue en injectant $\mathbf{T}_k^{iter}$ et $\mathbf{D}_k^{iter}$ dans l'équation (1.10),

12/répétition des étapes 8/ à 11/ jusqu'à convergence de l'algorithme itératif. La convergence est déterminée par la stabilisation de la valeur du débit total $|SR^{iter} - SR^{iter+1}| < \varepsilon$, ou par le dépassement d'un nombre d'itérations maximal $N_{max}^{iter}$.

De manière alternative à un précodeur SJNR, il peut être utilisé un précodeur MMSE. Dans [5], les auteurs ont décrit un procédé basé sur un émetteur MMSE pour chaque utilisateur qui tient compte de l'interférence générée par tous les autres utilisateurs. Pour chaque utilisateur, la forme du pré-codeur est d'abord déduite de l'équation suivante :

$$\mathbf{T}_k = \sqrt{\frac{P_T}{tr\left(\sum_{j=1}^{K} \hat{\mathbf{T}}_j \mathbf{V}_j^{(1)} \left(\hat{\mathbf{T}}_j \mathbf{V}_j^{(1)}\right)^H\right)}} \hat{\mathbf{T}}_k \, \mathbf{V}_k^{(1)} \tag{1.4}$$

où $\mathbf{H}_k \hat{\mathbf{T}}_k = \mathbf{U}_k \mathbf{\Sigma}_k \mathbf{V}_k^H$ et [ ]* étant l'opérateur de conjugaison on a :

$$\hat{\mathbf{T}}_k = \left(\left[\mathbf{H}_1^T \cdots \mathbf{H}_{k-1}^T \mathbf{H}_{k+1}^T \cdots \mathbf{H}_K^T\right]^* \left[\mathbf{H}_1^T \cdots \mathbf{H}_{k-1}^T \mathbf{H}_{k+1}^T \cdots \mathbf{H}_K^T\right]^T + \frac{N_{R_k}}{P_T} N_0 \mathbf{I}\right)^{-1} \times \hat{H}_k^H$$

$$\hat{H}_k = \begin{bmatrix} \mathbf{H}_k \\ \left[\mathbf{H}_1^T \cdots \mathbf{H}_{k-1}^T \mathbf{H}_{k+1}^T \cdots \mathbf{H}_K^T\right]^T \end{bmatrix}$$

Une forme itérative de ce type de précodeur MMSE a été proposée dans [2]. La méthode décrite est une solution linéaire itérative à base d'émetteurs et de récepteurs MMSE. L'émetteur est donné par l'équation suivante :

$$\mathbf{T}_k' = \left(\sum_{i=1}^{K} \left(\mathbf{H}_i^{iter}\right)^H \left(\mathbf{D}_i^{iter}\right)^H \mathbf{D}_i^{iter} \mathbf{H}_i^{iter} + \frac{N_0}{P_T} \sum_{j=1}^{K} tr\left(\mathbf{D}_j^H \left(\mathbf{D}_j^{iter}\right)^H\right) \mathbf{I}\right)^{-1} \left(\mathbf{H}_k^{iter}\right)^H \left(\mathbf{D}_k^{iter}\right)^H \tag{1.5}$$

Selon cette alternative, le procédé utilise les formules (1.4) et (1.5) en lieu et place des formules (1.2) et (1.3).

De manière alternative à un précodeur SJNR ou de manière successive, il peut être utilisé un précodeur SVH mais uniquement pour un système MISO.

Le calcul d'un précodeur SVH se base sur une analyse mathématique qui grâce à des calculs de dérivées exactes du lagrangien permet la maximisation du débit total $SR$ du système. Une approche itérative mettant en oeuvre ce procédé de maximisation est décrite dans [7]. La référence [7] définit le système d'équations suivant :

$$
\begin{cases}
\mathbf{T}^{iter_{svn}} = \left( \left( \sigma^2 tr \left( \mathbf{F}^{iter_{svn}-1} \right) \right) \mathbf{I} + \mathbf{H}^H \mathbf{F}^{iter_{svn}-1} \mathbf{H} \right)^{-1} \mathbf{H}^H \mathbf{G}^{iter_{svn}-1} \\[2mm]
num_k = \left| \left( \mathbf{HT}^{iter_{svn}} \right)_{kk} \right|^2 ; den_k = \sigma^2 tr \left( \mathbf{T}^{iter_{svn}} \left( \mathbf{T}^{iter_{svn}} \right)^H \right) + \sum_{n=1,n\neq k}^{K} \left| \left( \mathbf{HT}^{iter_{svn}} \right)_{kn} \right|^2 \\[2mm]
\mathbf{F}^{iter_{svn}} = diag \left( \dfrac{num_1}{den_1 \left( den_1 + num_1 \right)}, \cdots, \dfrac{num_K}{den_K \left( den_K + num_K \right)} \right) \\[2mm]
\mathbf{G}^{iter_{svn}} = diag \left( \dfrac{\left( \mathbf{HT}^{iter_{svn}-1} \right)_{11}}{den_1}, \cdots, \dfrac{\left( \mathbf{HT}^{iter_{svn}-1} \right)_{KK}}{den_K} \right)
\end{cases}
\tag{1.6}
$$

Où $\mathbf{H} = \left[ \left( \mathbf{H}_1^{iter} \right)^T, \cdots, \left( \mathbf{H}_K^{iter} \right)^T \right]^T$. Cet algorithme nécessite une initialisation qui consiste à mettre les matrices initiales F et G égales à I.

Selon cette alternative, le procédé utilise la formule (1.6) en lieu et place des formules (1.2) et (1.3).

Lorsque l'utilisation est de manière successive, alors le procédé comprend en outre par flux de données :

- un calcul itératif conjoint d'un troisième vecteur d'émission du précodage linéaire associé à un deuxième type d'émetteur, typiquement de type SVH calculé selon la formule (1.6), différent du première type et d'un troisième vecteur de réception $D_k^3$ associé au deuxième type de récepteur, initialisé avec le deuxième vecteur de réception, avec un test de sortie du calcul itératif basé sur un seuil de variations du débit entre itérations successives ou basé sur un nombre maximal d'itérations,

et dans lequel seuls les K troisième vecteurs d'émission sont utilisés pour le précodage, l'émission des K vecteurs de réception portent sur les K troisième vecteurs de réception $D_k^3$.

De manière alternative à un récepteur MSR donné par l'équation (1.8), il peut être utilisé un récepteur MMSE donné par l'équation suivante :

$$
\mathbf{D}_k = \mathbf{T}_k^H \mathbf{H}_k^H \left( \mathbf{H}_k \left( \sum_{i=1}^{K} \mathbf{T}_i \mathbf{T}_i^H \right) \mathbf{H}_k^H + N_0 \mathbf{I} \right)^{-1}
\tag{1.9}
$$

Les exemples suivants permettent d'illustrer un procédé selon l'invention.

Le premier exemple est relatif à un système MIMO multi utilisateurs comprenant d'une part une station de base avec $N_T$ = 4 antennes d'émission et d'autre part quatre récepteurs associés respectivement à $K$ = 4 utilisateurs ayant chacun $N_{R_k}$ = 4 antennes de réception. Les simulations prennent en compte des canaux de Rayleigh complètement décorrélés entre les K utilisateurs. Les valeurs utilisées des paramètres sont les suivantes $WIN_{MF}$ = 5 , $\varepsilon$ = 10-3, $\Delta_{MSR}$ = 5 et $\varepsilon_{MF}$ = 10-3. La seule condition d'arrêt utilisée consiste à fixer le nombre total d'itérations $N_{max}^{iter}$ à 50. Les performances ont ainsi été obtenues sans introduction de complexité supplémentaire par rapport à l'algorithme mono-itératif présenté dans [6].

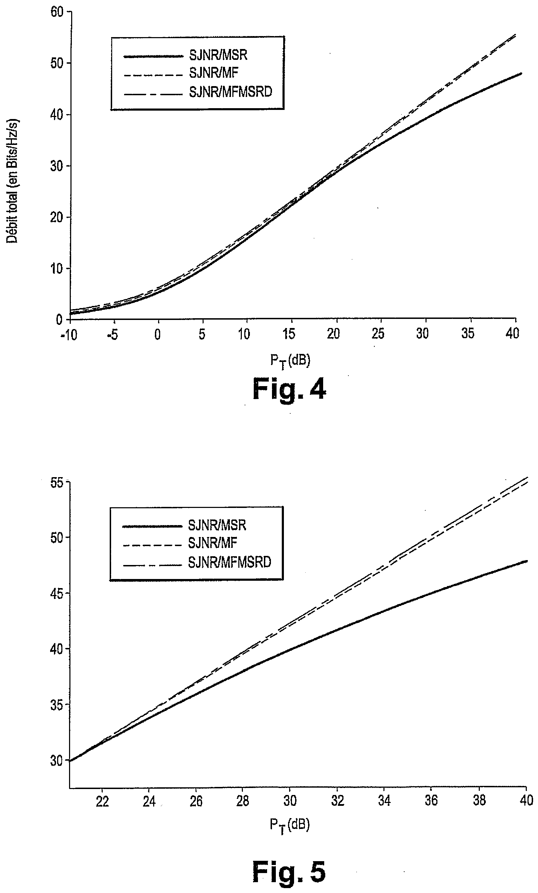

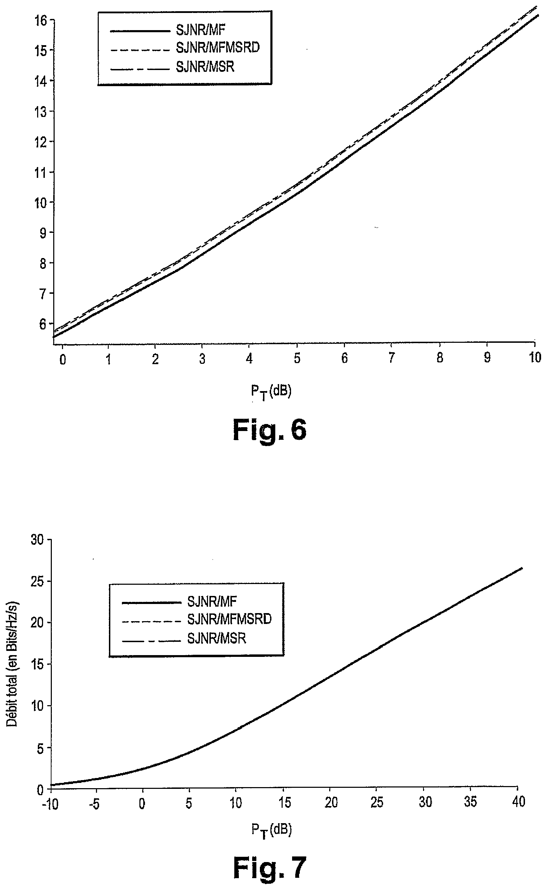

La courbe SJNR/MFMSRD du débit total du système en fonction de la puissance totale émise, obtenu avec un algorithme selon l'invention, est représentée sur la figure 4 et sur les figures 5 et 6 qui sont respectivement des loupes de la figure 4. Sur ces mêmes figures sont représentées les valeurs de débit total obtenu avec respectivement un algorithme avec un précodeur SJNR et un récepteur MF dérivé de la référence [6], courbe SJNR/MF, et un algorithme avec un précodeur SJNR et un récepteur MSR décrit dans la référence [6], courbe SJNR/MSR.

La comparaison de la courbe SJNR/MFMSRD avec les courbes SJNR/MF et SJNR/MSR permet de relever un gain de l'ordre de 0.5 bits/s/Hz par rapport à la solution SJNR/MF à haut SNR, en référence à la figure 5, sans pour autant pâtir des mauvaises performances de ce dernier algorithme à bas SNR. En effet les courbes de la figure 6 montrent aussi un gain, même s'il est plus faible, par rapport au meilleur algorithme à savoir le SJNR/MSR.

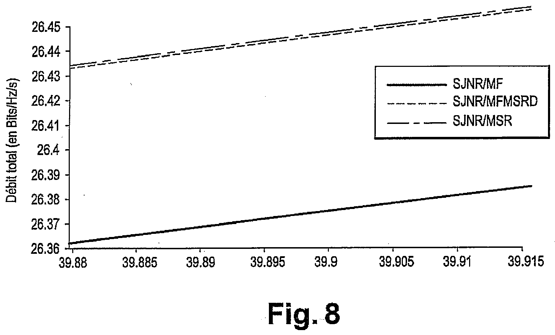

Le deuxième exemple est relatif à un système MIMO multi utilisateurs comprenant d'une part une station de base avec $N_T = 2$ antennes d'émission et d'autre part deux récepteurs associés respectivement à $K = 2$ utilisateurs ayant chacun $N_{R_k} = 2$ antennes de réception. Les conditions de simulation sont les mêmes que pour le premier exemple. Les résultats obtenus sont représentés sur les figures 7 et 8, la figure 8 étant une loupe de la figure 7. Les courbes SJNR/MFMSRD, SJNR/MF et SJNR/MSR sont relatives respectivement aux mêmes algorithmes que ceux de la figure 4. La comparaison de la courbe SJNR/MFMSRD avec les courbes SJNR/MF et SJNR/MSR permet de relever un gain, en référence à la figure 8.

Annexe A

Tableau 1

| $P_{total}$(dB) | -10 | -7.5 | -5 | -2.5 | 0 | 2.5 | 5 | 7.5 | 10 | 12.5 | 15 |
|---|---|---|---|---|---|---|---|---|---|---|---|
| $N_{flip}$ opt max $SR_{mean}$ | 1 | 1 | 1 | 1 | 1 | 9 | 14 | 22 | 19 | 29 | 12 |
| $N_{flip}$ mean max SR | 30.52 | 30.09 | 28.93 | 29.80 | 29.46 | 31.21 | 34.44 | 40.77 | 46.88 | 46.99 | 44.06 |

| $P_{total}$(dB) | 17.5 | 20 | 22.5 | 25 | 27.5 | 30 | 32.5 | 35 | 37.5 | 40 |
|---|---|---|---|---|---|---|---|---|---|---|
| $N_{flip}$ opt max $SR_{mean}$ | 16 | 22 | 25 | 26 | 32 | 45 | 48 | 47 | 47 | 48 |
| $N_{flip}$ mean max SR | 40.66 | 42.16 | 45.76 | 42.96 | 37.57 | 33.02 | 28.93 | 26.15 | 24.02 | 22.49 |

Références :

[1] Yongle Wu, Jinfan Zhang, Mingguang Xu, Shidong Zhou et Xibin Xu, "Multiuser MIMO Downlink Precoder Design Based on the Maximal SJNR Criterion", IEEE GLOBECOM 2005 proceedings, pages 2694-2698.
[2] H. Wang, X. Xu, M. Zhao, W. Wu, Y. Yao, "Robust Transmission for Multiuser MIMO Downlink Systems with Imperfect CSIT," IEEE WCNC 2008, pages 340-344.
[3] M. Costa, "Writing on Dirty Paper," IEEE Trans. Inf. Theory, vol. 29, no.3, pp.439-441, May 1983.
[4] G. Caire and S. Shamai, "On the achievable throughput of a multiantenna Gaussian broadcast channel," IEEE Trans. Inform. Theory, vol.49, no.7, pp.1691-1706, July 2003.
[5] M. Lee and S.K. Oh, "A Per-User Successive MMSE Precoding Technique in Multiuser MIMO Systems," IEEE Vehicular Technology Conférence (VTC2007-Spring), page(s): 2374-2378, 22-25 April 2007.
[6] M. Amara, Y. Yuan-Wu and D. Slock, "Receiver and Transmitter Iterative Optimization Using Maximum Sum-Rate Criterion for Multi-User MIMO Systems", ISCCSP 2010.
[7] Stojnic, M., Vikalo, H. et Hassibi, B. "Rate maximization in multi-antenna broadcast channels with linear preprocessing", 2004. GLOBECOM '04. IEEE.

**Revendications**

1. Procédé d'émission simultanée de K flux de données alloués respectivement à *K* utilisateurs différents, mis en oeuvre par un émetteur destiné à un système MIMO multi utilisateurs à $N_T$ antennes d'émission et $N_R = \sum_{k=1}^{K} N_{R_k}$ antennes de réception associées à *K* récepteurs associés respectivement à K utilisateurs, **caractérisé en ce qu'**il comprend au moins par flux de données :

- la succession de deux algorithmes itératifs différents de calcul conjoint d'un précodeur linéaire et d'un récepteur adaptés pour système MIMO multi utilisateurs, le deuxième algorithme itératif étant initialisé par la valeur de sortie du premier algorithme itératif dans lequel le premier algorithme itératif est adapté pour un premier type de récepteur de type MF et le deuxième algorithme est adapté pour un deuxième type de récepteur de type MSR.

**2.** Procédé d'émission simultanée de $K$ flux de données alloués respectivement à $K$ utilisateurs différents selon la revendication 1, dans lequel le premier algorithme itératif est adapté pour un premier type de récepteur présentant une variation non stable du débit total et le deuxième algorithme est adapté pour un deuxième type de récepteur présentant une variation strictement croissante du débit total.

**3.** Procédé d'émission simultanée de $K$ flux de données alloués respectivement à $K$ utilisateurs différents selon la revendication 1, comprenant :

- un calcul itératif conjoint d'un premier vecteur d'émission d'un précodage linéaire et d'un premier vecteur de réception $D_k^1$ associé au premier type de récepteur, avec un test de sortie du calcul itératif basé sur un seuil de variations du débit atteint sur une fenêtre donnée d'itérations ou basé sur un nombre maximal d'itérations,
- un calcul itératif conjoint d'un deuxième vecteur d'émission $T_k^{\prime 2}$ du précodage linéaire et d'un deuxième vecteur de réception $D_k^2$ associé au deuxième type de récepteur, initialisé avec le premier vecteur de réception, avec un test de sortie du calcul itératif basé sur un seuil de variations du débit entre itérations successives ou basé sur un nombre maximal d'itérations,

et en ce qu'il comprend :

- l'émission *des K* deuxième vecteurs de réception $D_k^2$ à destination *des K* récepteurs recevant les K flux,
- l'émission des $K$ flux précodés par les respectivement K deuxième vecteurs d'émission.

**4.** Procédé d'émission simultanée de flux de données alloués à $K$ utilisateurs différents selon la revendication 1, dans lequel le précodage linéaire met en oeuvre un algorithme de type appartenant à la liste suivante :

- SJNR qui maximise un rapport signal sur signal de brouillage et bruit,
- MMSE qui minimise une erreur quadratique moyenne.

**5.** Procédé d'émission simultanée de flux de données alloués à $K$ utilisateurs différents selon la revendication 3 dans lequel le premier vecteur d'émission et le deuxième vecteur d'émission sont associés à un premier type d'émetteur, comprenant en outre par flux de données :

- un calcul itératif conjoint d'un troisième vecteur d'émission du précodage linéaire associé à un deuxième type d'émetteur différent du première type et d'un troisième vecteur de réception $D_k^3$ associé au deuxième type de récepteur, initialisé avec le deuxième vecteur de réception, avec un test de sortie du calcul itératif basé sur un seuil de variations du débit entre itérations successives ou basé sur un nombre maximal d'itérations,

et dans lequel seuls les K troisième vecteurs d'émission sont utilisés pour le précodage, l'émission *des K* vecteurs de réception portent sur les $K$ troisième vecteurs de réception $D_k^3$.

**6.** Procédé d'émission simultanée de flux de données alloués à $K$ utilisateurs différents selon la revendication 5, dans lequel le deuxième type d'émetteur met en oeuvre un algorithme appartenant à la liste suivante :

- SJNR qui maximise un rapport signal sur signal de brouillage et bruit,
- MMSE qui minimise une erreur quadratique moyenne
- SVH qui optimise le débit total.

**7.** Emetteur (EM) adapté pour un système multi utilisateurs MIMO de télécommunication comprenant $N_T$ antennes d'émission destinées à être connectées à l'émetteur, $N_R = \sum_{k=1}^{K} N_{R_k}$ antennes de réception et $K$ récepteurs associés respectivement à $K$ utilisateurs et connectés respectivement à $N_{R_k}$ parmi les $N_R = \sum_{k=1}^{K} N_{R_k}$ antennes de réception, pour émettre *simultanément K* flux de données alloués respectivement aux *K* utilisateurs, **caractérisé en ce que** l'émetteur comprend :

- *K* pré-codeurs linéaires de vecteur d'émission $T_k$ pour générer *K* vecteurs intermédiaires de taille $N_T$,
- par pré-codeur, un moyen de calcul (CALCOD) adapté pour calculer itérativement de manière conjointe un premier vecteur d'émission d'un précodage linéaire et un premier vecteur de réception $D_k^1$ de taille $N_{R_k}$ associé à un premier type de récepteur de type MF, avec un test de sortie du calcul itératif basé sur un seuil de variations du débit atteint sur une fenêtre donnée d'itérations ou basé sur un nombre maximal d'itérations, puis pour calculer itérativement de manière conjointe un deuxième vecteur d'émission $T_k^2$ du précodage linéaire et un deuxième vecteur de réception $D_k^2$ de taille $N_{R_k}$ associé à un deuxième type de récepteur de type MSR, initialisé avec le premier vecteur de réception, avec un test de sortie du calcul itératif basé sur un seuil de variations du débit entre itérations successives ou basé sur un nombre maximal d'itérations, les *K* vecteurs d'émission *des K* pré-codeurs linéaires étant égal au deuxième vecteur d'émission $T_k^2$,
- $N_T$ additionneurs des $N_T$ composantes *des K* vecteurs intermédiaires pour générer un vecteur d'alimentation des $N_T$ antennes,
- un moyen d'émission *des K* deuxième vecteurs de réception $D_k^2$ à destination *des K* récepteurs.

8. Système multi utilisateurs MIMO de télécommunication comprenant un émetteur (EM), $N_T$ antennes d'émission connectées à l'émetteur, $N_R = \sum_{k=1}^{K} N_{R_k}$ antennes de réception et *K* récepteurs associés respectivement à *K* utilisateurs et connectés respectivement à $N_{R_k}$ parmi les $N_R = \sum_{k=1}^{K} N_{R_k}$ antennes de réception, **caractérisé en ce que** :

l'émetteur comprend :

- *K* pré-codeurs linéaires de vecteur d'émission $T_k$ pour générer *K* vecteurs intermédiaires de taille $N_T$,
- par pré-codeur, un moyen de calcul (CALCOD) adapté pour calculer itérativement de manière conjointe un premier vecteur d'émission d'un précodage linéaire et un premier vecteur de réception $D_k^1$ de taille $N_{R_k}$ associé à un premier type de récepteur de type MF, avec un test de sortie du calcul itératif basé sur un seuil de variations du débit atteint sur une fenêtre donnée d'itérations ou basé sur un nombre maximal d'itérations, puis pour calculer itérativement de manière conjointe un deuxième vecteur d'émission $T_k^2$ du précodage linéaire et un deuxième vecteur de réception $D_k^2$ de taille $N_{R_k}$ associé à un deuxième type de récepteur de type MSR, initialisé avec le premier vecteur de réception, avec un test de sortie du calcul itératif basé sur un seuil de variations du débit entre itérations successives ou basé sur un nombre maximal d'itérations, les *K* vecteurs d'émission *des K* pré-codeurs linéaires étant égal au deuxième vecteur d'émission $T_k^2$,
- $N_T$ additionneurs des $N_T$ composantes *des K* vecteurs intermédiaires pour générer un vecteur d'alimentation des $N_T$ antennes,
- un moyen d'émission *des K* deuxième vecteurs de réception $D_k^2$ à destination *des K* récepteurs

et **en ce que** chaque récepteur *k* comprend :

- un moyen de réception du vecteur de réception $D_k^2$ qui maximise le débit du flux *k,*
- un décodeur linéaire adapté pour extraire le flux *k* parmi les *K* flux au moyen du vecteur de réception $D_k^2$, un moyen pour estimer la matrice $H_k$ du canal de propagation, et **en ce qu'**il comprend associé à chaque récepteur *k* :un moyen pour émettre la matrice $H_k$ à destination de l'émetteur.

9. Programme d'ordinateur sur un support d'informations, ledit programme comportant des instructions de programme adaptées à la mise en oeuvre d'un procédé d'émission simultanée de *K* flux de données alloués respectivement à *K* utilisateurs différents, mis en oeuvre par un émetteur destiné à un système multi utilisateurs MIMO à $N_T$ antennes d'émission et $N_R = \sum_{k=1}^{K} N_{R_k}$ antennes de réception associées à *K* récepteurs associés respectivement à *K* utilisateurs selon l'une quelconque des revendications 1 à 6, lorsque ledit programme est chargé et exécuté dans un émetteur (EM) destiné à mettre en oeuvre le procédé d'émission.

10. Support d'informations comportant des instructions de programme adaptées à la mise en oeuvre d'un procédé d'émission simultanée de K flux de données alloués respectivement à *K* utilisateurs différents, mis en oeuvre par un émetteur destiné à un système multi utilisateurs MIMO à $N_T$ antennes d'émission et $N_R = \sum_{k=1}^{K} N_{R_k}$ antennes de réception associées à *K* récepteurs associés respectivement à K utilisateurs, selon l'une quelconque des revendications 1 à 6, lorsque ledit programme est chargé et exécuté dans un émetteur (EM) destiné à mettre en oeuvre le procédé d'émission.

## Patentansprüche

1. Verfahren zum gleichzeitigen Senden von je K verschiedenen Benutzern zugeteilten K Datenströmen, angewendet von einem Sender, der für ein MIMO-Mehrbenutzersystem mit $N_T$ Sendeantennen und

$$N_R = \sum_{k=1}^{K} N_{R_k}$$

Empfangsantennen bestimmt ist, die je K Benutzern zugeordneten K Empfängern zugeordnet sind, **dadurch gekennzeichnet, dass** es mindestens pro Datenstrom enthält:

- die Aufeinanderfolge von zwei unterschiedlichen iterativen Algorithmen einer gemeinsamen Berechnung eines linearen Vorcodierers und eines Empfängers, die für ein MIMO-Mehrbenutzersystem geeignet sind, wobei der zweite iterative Algorithmus vom Ausgangswert des ersten iterativen Algorithmus initialisiert wird, wobei der erste iterative Algorithmus für einen ersten Empfängertyp vom Typ MF und der zweite Algorithmus für einen zweiten Empfängertyp vom Typ MSR geeignet ist.

2. Verfahren zum gleichzeitigen Senden von je K verschiedenen Benutzern zugeteilten K Datenströmen nach Anspruch 1, wobei der erste iterative Algorithmus für einen ersten Empfängertyp geeignet ist, der eine instabile Änderung der Gesamtübertragungsrate aufweist, und der zweite Algorithmus für einen zweiten Empfängertyp geeignet ist, der eine strikt zunehmende Änderung der Gesamtübertragungsrate aufweist.

3. Verfahren zum gleichzeitigen Senden von je K verschiedenen Benutzern zugeteilten K Datenströmen nach Anspruch 1, das enthält:

- eine gemeinsame iterative Berechnung eines ersten Sendevektors einer linearen Vorcodierung und eines ersten Empfangsvektors $D_k^1$, der dem ersten Empfängertyp zugeordnet ist, mit einem Ausgangstest der iterativen Berechnung basierend auf einer Änderungsschwelle der erreichten Übertragungsrate in einem gegebenen Fenster von Iterationen oder basierend auf einer maximalen Anzahl von Iterationen,
- eine gemeinsame iterative Berechnung eines zweiten Sendevektors $T_k^2$ der linearen Vorcodierung und eines zweiten Empfangsvektors $D_k^2$, der dem zweiten Empfängertyp zugeordnet ist, initialisiert mit dem ersten Empfangsvektor, mit einem Ausgangstest der iterativen Berechnung basierend auf einer Änderungsschwelle der Übertragungsrate zwischen aufeinanderfolgenden Iterationen oder basierend auf einer maximalen Anzahl von Iterationen,

und dass es enthält:

- das Senden der K zweiten Empfangsvektoren Dk an die K Empfänger, die die K Ströme empfangen,
- das Senden der von den je zweiten Sendevektoren vorcodierten K Ströme.

4. Verfahren zum gleichzeitigen Senden von je K verschiedenen Benutzern zugeteilten Datenströmen nach Anspruch 1, wobei die lineare Vorcodierung einen Algorithmus von der Art anwendet, der zur folgenden Liste gehört:

- SJNR, der ein Signal zu Störsignal und RauschVerhältnis maximiert,
- MMSE, der einen mittleren quadratischen Fehler minimiert.

5. Verfahren zum gleichzeitigen Senden von je K verschiedenen Benutzern zugeteilten Datenströmen nach Anspruch 3, wobei der erste Sendevektor und der zweite Sendevektor einem ersten Sendertyp zugeordnet sind, das außerdem pro Datenstrom enthält:

- eine gemeinsame iterative Berechnung eines dritten Sendevektors der linearen Vorcodierung zugeordnet zu einem zweiten Sendertyp anders als der erste Typ und eines dritten Empfangsvektors $D_k^3$ zugeordnet zum zweiten Empfängertyp, initialisiert mit dem zweiten Empfangsvektor, mit einem Ausgangstest der iterativen Berechnung basierend auf einer Änderungsschwelle der Übertragungsrate zwischen aufeinanderfolgenden Iterationen oder basierend auf einer maximalen Anzahl von Iterationen,

und wobei nur die K dritten Sendevektoren für die Vorcodierung verwendet werden, wobei das Senden der K Empfangsvektoren die K dritten Empfangsvektoren $D_k^3$ betrifft.

6. Verfahren zum gleichzeitigen Senden von je K verschiedenen Benutzern zugeteilten Datenströmen nach Anspruch 5, wobei der zweite Sendertyp einen Algorithmus anwendet, der zur folgenden Liste gehört:

- SJNR, der ein Signal zu Störsignal und RauschVerhältnis maximiert,
- MMSE, der einen mittleren quadratischen Fehler minimiert,
- SVH, der die Gesamtübertragungsrate optimiert.

7. Sender (EM), der für ein Telekommunikations-MIMO-Mehrbenutzersystem geeignet ist, der $N_T$ Sendeantennen, die dazu bestimmt sind, mit dem Sender verbunden zu werden,

$$N_R = \sum_{k=1}^{K} N_{R_k}$$

Empfangsantennen und K Empfänger enthält, die je K Benutzern zugeordnet sind und je mit $N_{R_k}$ unter den

$$N_R = \sum_{k=1}^{K} N_{R_k}$$

Empfangsantennen verbunden sind, um gleichzeitig K Datenströme zu senden, die je den K Benutzern zugeteilt sind, **dadurch gekennzeichnet, dass** der Sender enthält:

- K lineare Vorcodierer eines Sendevektors $T_k$, um K Zwischenvektoren der Größe $N_T$ zu generieren,
- pro Vorcodierer, eine Recheneinrichtung (CALCOD), die geeignet ist, um iterativ gemeinsam einen ersten Sendevektor einer linearen Vorcodierung und einen ersten Empfangsvektor Dk der Größe $N_{R_k}$ zu berechnen, der einem ersten Empfängertyp des Typs MF zugeordnet ist, mit einem Ausgangstest der iterativen Berechnung basierend auf einer Änderungsschwelle der erreichten Übertragungsrate in einem gegebenen Fenster von Iterationen oder basierend auf einer maximalen Anzahl von Iterationen, dann, um iterativ gemeinsam einen zweiten Sendevektor $T_k^2$ der linearen Vorcodierung und einen zweiten Empfangsvektor $D_k^2$ der Größe $N_{R_k}$

zugeordnet zu einem zweiten Empfängertyp des Typs MSR zu berechnen, initialisiert mit dem ersten Empfangsvektor, mit einem Ausgangstest der iterativen Berechnung basierend auf einer Änderungsschwelle der Übertragungsrate zwischen aufeinanderfolgenden Iterationen oder basierend auf einer maximalen Anzahl von Iterationen, wobei die K Sendevektoren der K linearen Vorcodierer gleich dem zweiten Sendevektor $T_k^2$ sind,

- $N_T$ Addierglieder der $N_T$ Komponenten der K Zwischenvektoren, um einen Versorgungsvektor der $N_T$ Antennen zu generieren,

- eine Sendeeinrichtung der K zweiten Empfangsvektoren $D_k^2$ an die K Empfänger.

8. Telekommunikations-MIMO-Mehrbenutzersystem, das einen Sender (EM), $N_T$ mit dem Sender verbundene Sendeantennen,

$$N_R = \sum_{k=1}^{K} N_{R_k}$$

Empfangsantennen und K je K Benutzern zugeordnete und je mit $N_{R_k}$ unter den

$$N_R = \sum_{k=1}^{K} N_{R_k}$$

Empfangsantennen verbundene Empfänger enthält, **dadurch gekennzeichnet, dass** der Sender enthält:

- K lineare Vorcodierer eines Sendevektors $T_k$, um K Zwischenvektoren der Größe $N_T$ zu generieren,
- pro Vorcodierer eine Recheneinrichtung (CALCOD), die geeignet ist, um iterativ gemeinsam einen ersten Sendevektor einer linearen Vorcodierung und einen ersten Empfangsvektor $D_k^1$ der Größe $N_{R_k}$ zu berechnen, der einem ersten Empfängertyp des Typs MF zugeordnet ist, mit einem Ausgangstest der iterativen Berechnung basierend auf einer in einem gegebenen Fenster von Iterationen erreichten Änderungsschwelle der Übertragungsrate oder basierend auf einer maximalen Anzahl von Iterationen, dann, um iterativ gemeinsam einen zweiten Sendevektor $T_k^2$ der linearen Vorcodierung und einen zweiten Empfangsvektor $D_k^2$ der Größe $N_{R_k}$ zu berechnen, der einem zweiten Empfängertyp des Typs MSR zugeordnet ist, initialisiert mit dem ersten Empfangsvektor, mit einem Ausgangstest der iterativen Berechnung basierend auf einer Änderungsschwelle der Übertragungsrate zwischen aufeinanderfolgenden Iterationen oder basierend auf einer maximalen Anzahl von Iterationen, wobei die K Sendevektoren der K linearen Vorcodierer gleich dem zweiten Sendevektor $T_k^2$ sind,
- $N_T$ Addierglieder der $N_T$ Komponenten der K Zwischenvektoren, um einen Versorgungsvektor der $N_T$ Antennen zu generieren,
- eine Sendeeinrichtung der K zweiten Empfangsvektoren $D_k^2$ an die K Empfänger,

und dass jeder Empfänger k enthält:

- eine Empfangseinrichtung des Empfangsvektors $D_k^2$, die die Übertragungsrate des Stroms k maximiert,
- einen Lineardecodierer, der geeignet ist, den Strom k aus den K Strömen mittels des Empfangsvektors $D_k^2$ zu entnehmen, eine Einrichtung, um die Matrix $H_k$ des Ausbreitungskanals zu schätzen,

und dass es jedem Empfänger k zugeordnet eine Einrichtung enthält, um die Matrix $H_k$ an den Sender zu senden.

9. Computerprogramm auf einem Datenträger, wobei das Programm Programmanweisungen aufweist, die zur Durchführung eines gleichzeitigen Sendeverfahrens von K Datenströmen geeignet sind, die je K verschiedenen Benutzern zugeteilt sind, durchgeführt durch einen Sender, der für ein MIMO-Mehrfachbenutzersystem mit $N_T$ Sendeantennen und

$$N_R = \sum_{k=1}^{K} N_{R_k}$$

Empfangsantennen bestimmt ist, die K Empfängern zugeordnet sind, die je K Benutzern nach einem der Ansprüche 1 bis 6 zugeordnet sind, wenn das Programm in einen Sender (EM) geladen und dort ausgeführt wird, der dazu bestimmt ist, das Sendeverfahren durchzuführen.

10. Datenträger, der Programmanweisungen aufweist, die für die Durchführung eines gleichzeitigen Sendeverfahrens von K Datenströmen geeignet sind, die je K unterschiedlichen Benutzern zugeteilt sind, durchgeführt von einem Sender, der für ein MIMO-Mehrfachbenutzersystem mit $N_T$ Sendeantennen und

$$N_R = \sum_{k=1}^{K} N_{R_k}$$

Empfangsantennen bestimmt ist, die K Empfängern zugeordnet sind, die je K Benutzern zugeordnet sind, nach einem der Ansprüche 1 bis 6, wenn das Programm in einen Sender (EM) geladen und dort ausgeführt wird, der dazu bestimmt ist, das Sendeverfahren durchzuführen.

**Claims**

1. Method for simultaneous transmission of *K* datastreams allocated respectively to K different users, implemented by a transmitter intended for a multiuser MIMO system with $N_T$ transmission antennas and $N_R = \sum_{k=1}^{K} N_{R_k}$ reception antennas associated with *K* receivers associated respectively with K users, **characterized in that** it comprises at least for each datastream:

    - the succession of two different iterative joint computation algorithms of a linear precoder and of a receiver suitable for a multiuser MIMO system, the second iterative algorithm being initialized by the output value of the first iterative algorithm in which the first iterative algorithm is suited to a first type of receiver of MF type and the second algorithm is suited to a second type of receiver of MSR type.

2. Method for simultaneous transmission of *K* datastreams allocated respectively to K different users according to Claim 1, in which the first iterative algorithm is suited to a first type of receiver exhibiting a non-stable variation of the total bit rate and the second algorithm is suited to a second type of receiver exhibiting a strictly increasing variation of the total bit rate.

3. Method for simultaneous transmission of *K* datastreams allocated respectively to K different users according to Claim 1, comprising:

    - a joint iterative computation of a first transmission vector of a linear precoding and of a first reception vector $D_k^1$ associated with the first type of receiver, with an output test of the iterative computation based on a threshold of variations of the bit rate reached over a given window of iterations or based on a maximum number of iterations,

    - a joint iterative computation of a second transmission vector $T_k^2$ of the linear precoding and of a second reception vector $D_k^2$ associated with the second type of receiver, initialized with the first reception vector, with an output test of the iterative computation based on a threshold of variations of the bit rate between successive iterations or based on a maximum number of iterations,

    and in that it comprises:

    - the transmission of the K second reception vectors $D_k^2$ to the K receivers receiving the K streams,

- the transmission of the K streams precoded by the respectively K second transmission vectors.

4. Method for simultaneous transmission of datastreams allocated to K different users according to Claim 1, in which the linear precoding implements an algorithm of the type belonging to the following list:

 - SJNR which maximizes a signal-to-jamming-signal-plus-noise ratio,
 - MMSE which minimizes a mean square error.

5. Method for simultaneous transmission of datastreams allocated to K different users according to Claim 3, in which the first transmission vector and the second transmission vector are associated with a first type of transmitter, further comprising for each datastream:

 - a joint iterative computation of a third transmission vector of the linear precoding associated with a second type of transmitter different from the first type and of a third reception vector $D_k^3$ associated with the second type of receiver, initialized with the second reception vector, with an output test of the iterative computation based on a threshold of variations of the bit rate between successive iterations or based on a maximum number of iterations,

and in which only the K third transmission vectors are used for the precoding, the transmission of the K reception vectors relate to the K third reception vectors $D_k^3$ .

6. Method for simultaneous transmission of datastreams allocated to K different users according to Claim 5, in which the second type of transmitter implements an algorithm belonging to the following list:

 - SJNR which maximizes a signal-to-jamming-signal-plus-noise ratio,
 - MMSE which minimizes a mean square error,
 - SVH which optimizes the total bit rate.

7. Transmitter (EM) suitable for a multiuser MIMO telecommunication system comprising $N_T$ transmission antennas intended to be connected to the transmitter, $N_R = \sum_{k=1}^{K} N_{R_k}$ reception antennas and $K$ receivers associated respectively with K users and connected respectively to $N_{Rk}$ out of the $N_R = \sum_{k=1}^{K} N_{R_k}$ reception antennas, to simultaneously transmit $K$ datastreams allocated respectively to the K users, **characterized in that** the transmitter comprises:

 - $K$ linear precoders of transmission vector $T_k$ for generating K intermediate vectors of size $N_T$,
 - for each precoder, a computation means (CALCOD) suitable for jointly iteratively computing a first transmission vector of a linear precoding and a first reception vector $D_k^1$ of size $N_{R_k}$ associated with a first type of receiver of MF type, with an output test of the iterative computation based on a threshold of variations of the bit rate reached over a given window of iterations or based on a maximum number of iterations, then for jointly iteratively computing a second transmission vector $T_k^2$ of the linear precoding and a second reception vector $D_k^2$ of size $N_{Rk}$ associated with a second type of receiver of MSR type, initialized with the first reception vector, with an output test of the iterative computation based on a threshold of variations of the bit rate between successive iterations or based on a maximum number of iterations, the $K$ transmission vectors of the $K$ linear precoders being equal to the second transmission vector $T_k^2$,
 - $N_T$ summers of the $N_T$ components of the $K$ intermediate vectors for generating a supply vector for the $N_T$ antennas,
 - a means for transmitting the $K$ second reception vectors $D_k^2$ to the K receivers.

8. Multiuser MIMO telecommunication system comprising a transmitter (EM), $N_T$ transmission antennas connected to the transmitter, $N_R = \sum_{k=1}^{K} N_{R_k}$ reception antennas and K receivers associated respectively with K users and connected respectively to $N_{R_k}$ out of the $N_R = \sum_{k=1}^{K} N_{R_k}$ reception antennas, **characterized in that**:

the transmitter comprises:

- $K$ linear precoders of transmission vector $T_k$ for generating $K$ intermediate vectors of size $N_T$,
- for each precoder, a computation means (CALCOD) suitable for jointly iteratively computing a first transmission vector of a linear precoding and a first reception vector $D_k^1$ of size $N_{R_k}$ associated with a first type of receiver of MF type, with an output test of the iterative computation based on a threshold of variations of the bit rate reached over a given window of iterations or based on a maximum number of iterations, then for jointly iteratively computing a second transmission vector $T_k^2$ of the linear precoding and a second reception vector $D_k^2$ of size $N_{R_k}$ associated with a second type of receiver of MSR type, initialized with the first reception vector, with an output test of the iterative computation based on a threshold of variations of the bit rate between successive iterations or based on a maximum number of iterations, the $K$ transmission vectors of the $K$ linear precoders being equal to the second transmission vector $T_k^2$,
- $N_T$ summers of the $N_T$ components of the $K$ intermediate vectors for generating a supply vector for the $N_T$ antennas,
- a means for transmitting the $K$ second reception vectors $D_k^2$ to the $K$ receivers

and **in that** each receiver $k$ comprises:

- a means for receiving the reception vector $D_k^2$ which maximizes the bit rate of the stream $k$,
- a linear decoder suitable for extracting the stream $k$ from the $K$ streams by means of the reception vector $D_k^2$, a means for estimating the matrix $H_k$ of the propagation channel, and **in that** it comprises, associated with each receiver $k$: a means for transmitting the matrix $H_k$ to the transmitter.

9. Computer program for an information medium, said program comprising program instructions suitable for implementing a method for simultaneous transmission of K datastreams allocated respectively to $K$ different users, implemented by a transmitter intended for a multiuser MIMO system with $N_T$ transmission antennas and $N_R = \sum_{k=1}^{K} N_{R_k}$ reception antennas associated with $K$ receivers associated respectively with K users according to any one of Claims 1 to 6, when said program is loaded and run in a transmitter (EM) intended to implement the transmission method.

10. Information medium comprising program instructions suitable for implementing a method for simultaneous transmission of $K$ datastreams allocated respectively to $K$ different users, implemented by a transmitter intended for a multiuser MIMO system with $N_T$ transmission antennas and $N_R = \sum_{k=1}^{K} N_{R_k}$ reception antennas associated with $K$ receivers associated respectively with K users, according to any one of Claims 1 to 6, when said program is loaded and run in a transmitter (EM) intended to implement the transmission method.

**Fig. 1**

**Fig. 2**

**Fig. 3**

**Fig. 4**

**Fig. 5**

Fig. 6

Fig. 7

Fig. 8

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Receiver and transmitter iterative optimization using maximum sum-rate criterion for Multi-User MIMO systems. **MUSTAPHA AMARA et al.** COMMUNICATIONS, CONTROL AND SIGNAL PROCESSING (ISCCSP), 2010 4TH INTERNATIONAL SYMPOSIUM ON. IEEE, 03 Mars 2010, 1-6
- **YONGLE WU ; JINFAN ZHANG ; MINGGUANG XU ; SHIDONG ZHOU ; XIBIN XU.** Multiuser MIMO Downlink Precoder Design Based on the Maximal SJNR Criterion. *IEEE GLOBECOM,* 2005, 2694-2698
- **H. WANG ; X. XU ; M. ZHAO ; W. WU ; Y. YAO.** Robust Transmission for Multiuser MIMO Downlink Systems with Imperfect CSIT. *IEEE WCNC,* 2008, 340-344
- **M. COSTA.** Writing on Dirty Paper. *IEEE Trans. Inf. Theory,* Mai 1983, vol. 29 (3), 439-441
- **G. CAIRE ; S. SHAMAI.** On the achievable throughput of a multiantenna Gaussian broadcast channel. *IEEE Trans. Inform. Theory,* Juillet 2003, vol. 49 (7), 1691-1706
- A Per-User Successive MMSE Precoding Technique in Multiuser MIMO Systems. **M. LEE ; S.K. OH.** IEEE Vehicular Technology Conférence. VTC2007-Spring, 22 Avril 2007, 2374-2378
- **M. AMARA ; Y. YUAN-WU ; D. SLOCK.** Receiver and Transmitter Iterative Optimization Using Maximum Sum-Rate Criterion for Multi-User MIMO Systems. *ISCCSP,* 2010
- Rate maximization in multi-antenna broadcast channels with linear preprocessing. **STOJNIC, M. ; VIKALO, H. ; HASSIBI, B.** GLOBECOM '04. IEEE, 2004